# EUROPEAN PATENT APPLICATION

(11) **EP 3 750 654 A1**
(43) Date of publication of application: **16.12.2020**
(21) Application number: 19180214.9
(22) Date of filing: 14.06.2019
(51) Int. Cl.: B23C 5/22, B23G 5/18, B23B 27/02

(54) **THREAD MILLING CUTTER**

(71) Applicant: VARGUS Ltd., 22311 Nahariya (IL)
(72) Inventor: Morgulis, Rafael, 2194012 Karmiel (IL)
(74) Representative: Patentanwälte Ruff, Wilhelm, Beier, Dauster & Partner mbB

(57) **Abstract**

The invention relates to a cutting insert and a cutting tool, in particular a thread milling cutter, with a cutting insert, wherein the cutting insert has an elongated bar shaped main body with a first end and a second end, and with two side faces and a front face extending between the first end and the second, and wherein the cutting insert (3) has exactly one cutting tooth (35) protruding from the front face (34) which is arranged closer to the first end (31) than to the second end (32) of the cutting insert (3).

## Description

### TECHNICAL FIELD AND PRIOR ART

The invention relates to a cutting insert and a cutting tool comprising several cutting inserts, in particular a thread milling cutter.

US 2006/0045633 A1 shows a thread milling cutter with a tool holder and several cutting inserts fittable thereto. The tool holder is provided with several slot-like recesses evenly distributed over the tool circumference and running essentially in an axial direction of the tool, in which recesses cutting inserts having an elongated bar shape can be inserted. The cutting inserts are provided with at least one cutting edge having a thread profiling with a plurality of cutting teeth, which is adapted to a profile of a thread to be cut. Typically, a length of the cutting insert is chosen as long as possible. For example, the length of the cutting insert is chosen equal to a depth of the thread to be cut. In this case, an operation is possible with a minimum number of loops, for example one loop only.

### SUMMARY OF THE INVENTION

It is the object of the invention to provide a cutting insert and a thread milling cutter which are suitable for cutting long or deep threads.

This object is solved by a cutting insert and a cutting tool with the features of claims 1 and 5 and a use of a cutting insert with the features of claim 9. Preferred embodiments are defined in the dependent claims.

According to a first aspect, a cutting insert having an elongated bar shaped main body with a first end and a second end as well as two side faces and a front face extending between the first end and the second end is provided, wherein the cutting insert has exactly one cutting tooth protruding from the front face which is arranged closer to the first end than to the second end.

By providing a cutting insert with only one cutting tooth, at each moment during a machining operation only one cutting edge with a length of one pitch is in contact with the workpiece. Thus, compared to prior art cutting inserts having a thread profiling with a plurality of cutting teeth, cutting forces are reduced and the risk of vibrations that might occur when cutting deep threads is reduced.

The cutting insert or several cutting inserts can be mounted to a conventional tool holder having at least one slot-like recess oriented substantially in an axial direction of the tool holder.

In one embodiment, the cutting insert is double-sided, wherein both sides of the cutting tooth are provided with a cutting edge. In other words, an indexable cutting insert is provided. Hence, the cutting insert can be fixed to a tool holder in two different orientations, wherein due to the unsymmetrical design, a distance of the cutting tooth from a distal end of the tool holder depends on the orientation of the cutting insert.

In one embodiment, a distance A of the cutting tooth from a middle plane between the first end and the second end, i.e. a distance A of the axis of symmetry of the threading profile of the cutting tooth from a middle plane between the first end and the second end, is set such that twice this distance A is an integer multitude N of a pitch p of a thread to be cut, i.e. 2 x A = N x p. With this design, two cutting inserts can be arranged with opposite orientations in two recesses of a tool holder which are identical in design, wherein with each rotation of the cutting tool about its axis relative to the workpiece, two recesses or pitches of the thread are formed, while at any moment during the operation only one cutting tooth is in contact with the workpiece.

In one embodiment, at least one of the side faces is provided with at least one cavity for receiving an end of a clamping screw. As mentioned above, in embodiments of the cutting insert, the cutting insert is a double-sided cutting insert or indexable cutting insert, which can be fixed to a tool holder in two different orientations, wherein in this case cavities can also be provided on both side faces. Cavities provided at opposite side faces in embodiments of the invention are offset to one another. In one embodiment, at least one cavity arranged on one of the side faces is arranged in a region of the cutting tooth.

According to a second aspect, a cutting tool comprising a tool holder, and several cutting inserts having an elongated bar shaped main body and exactly one cutting tooth protruding from the main body is provided, wherein the tool holder has several slot-like recesses distributed over its circumference and oriented substantially in an axial direction of the tool holder, in which recesses the cutting inserts are insertable, wherein an even number of cutting inserts is inserted in the recesses, and wherein the cutting inserts are alternately arranged with the first end or the second end facing towards a distal end of the tool holder.

In a typical thread milling operation, the cutting tool is rotated about its axis and moved along a helical path relative to a workpiece for forming the thread. As each cutting insert is provided with only one cutting tooth, at any moment during the milling operation only one cutting tooth is in contact with the workpiece.

In embodiments, a distance D between cutting teeth of alternately arranged cutting inserts in the axial direction of the tool holder is an integer multitude N of a pitch p of a thread to be cut, i.e. D = N x p. Hence, with the cutting teeth of the alternately arranged cutting inserts two recesses or pitches are formed with each rotation of the cutting tool.

In one embodiment, the tool holder is provided with tapped holes each extending from the circumferential surface of the tool holder to one of the recesses and the cutting inserts are fixed in the recess by clamping screws screwed into the tapped holes and acting on one side face of the cutting insert.

In one embodiment, the recesses are unevenly distributed over the circumference of the tool holder. In addition or in alternative, in one embodiment, the number of recesses exceeds the number of cutting inserts, wherein the person skilled in the art will choose the recesses into which cutting inserts are inserted, according to the cutting operation. In a refinement of the cutting tool, the tool holder is provided with an even number of slot-like recesses, which are evenly distribute over its circumference.

According to a third aspect, a use of a cutting insert with a tool holder having several slot-like recesses distributed over its circumference and oriented substantially in an axial direction of the tool holder is provided, the cutting insert having an elongated bar shaped main body with a first end and a second end as well as two side faces and a front face extending between the first end and the second end, and the cutting insert having exactly one cutting tooth protruding from the front face which is arranged closer to the first end than to the second end of the cutting insert, wherein the cutting inserts is inserted in a recess of the tool holder with the first or the second end facing towards a distal end of the tool holder.

In the following, an embodiment of the invention is described in detail with reference to the drawings. Throughout the drawings, the same elements will be denoted by the same reference numerals.
- Fig. 1:: shows in a perspective view a cutting tool with six cutting inserts.
- Fig. 2:: shows the cutting tool of Fig. 1 in an explosive view.
- Fig. 3:: shows in a perspective view a cutting insert for the cutting tool of Fig. 1.
- Fig. 4:: shows in a side view two cutting inserts for the cutting tool of Fig. 1.

### DETAILED DESCRIPTION OF EMBODIMENTS OF THE INVENTION

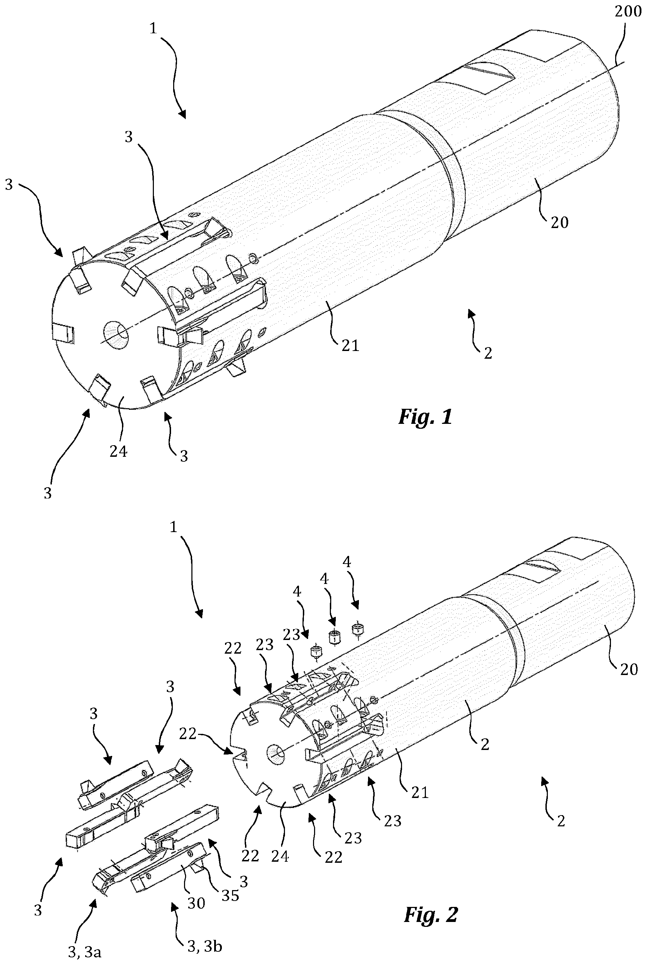

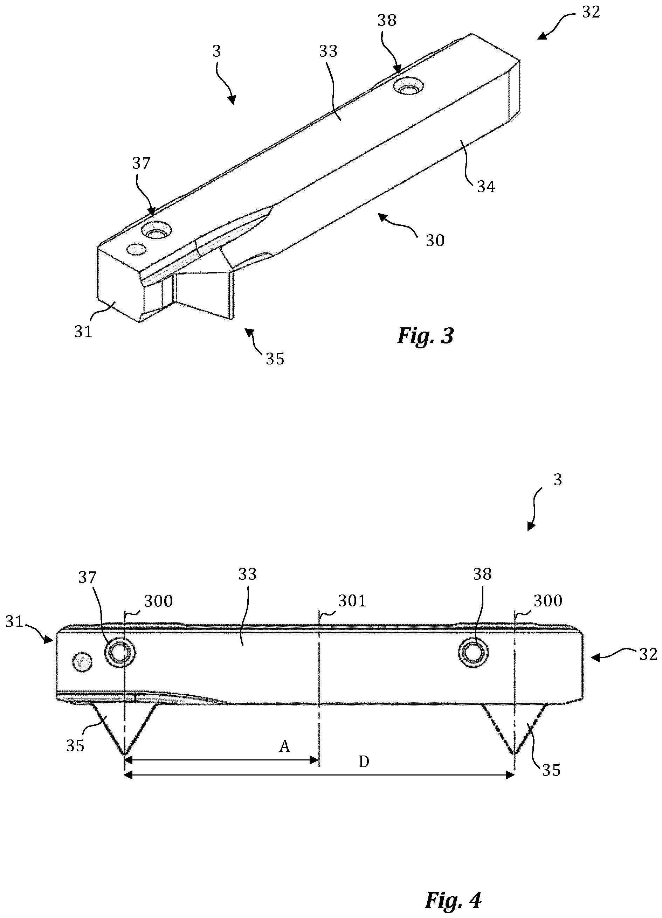

Figs. 1 and 2 show a cutting tool 1 with a tool holder 2 and six cutting inserts 3 in a perspective view and an explosive view, respectively. Fig. 3 shows one cutting inserts 3 with exactly one cutting tooth 35 in isolation. Fig. 4 shows two alternately arranged cutting inserts 3 stacked on top of each other, each cutting insert 3 provided with one cutting tooth 35, wherein the cutting tooth 35 of the cutting insert arranged below is shown as a broken line.

The tool holder 2 is provided with a mounting shank 20 for mounting the tool holder 2 to a machine-tool (not shown) and a cutter shank 21, in which latter the cutting inserts 3 are fixed using clamping screws 4.

In the embodiment shown, the cutter shank 21 is provided with six slot-like recesses 22 distributed over its circumference and oriented substantially in an axial direction 200 of the tool holder 2. The tool holder 2 is provided with a plurality of tapped holes 23 each extending from the circumferential surface of the tool holder 2 to one of the recesses 22. In the embodiment shown, three tapped holes 23 are assigned to each recess 22, which are offset from one another in the axial direction 200. The tapped holes 23 extend at least essentially perpendicular to a median plane of the associated recess 22. The cutting inserts 3 are fixed in the recesses 22 by the clamping screws 4 screwed into the tapped holes 23. In the embodiment shown, central tapped holes 23 of each group of three tapped holes 23 associated with one recess 22 are displaced relative to the two other tapped holes 23 of the same group in a direction towards a central axis of the tool holder 2.

In the embodiment shown, in each recess 22 a cutting insert 3 is inserted.

The cutting inserts 3 each have an elongated bar shaped main body 30 and one cutting tooth 35 projecting from the main body 30.

As best seen in Fig. 3, the main body 30 of the depicted cutting inserts 3 has an at least essentially rectangular cuboid shape with a first end 31 and a second end 32, wherein two side faces 33 and a front face 34 extend between the first end 31 and the second end 32. The cutting tooth 35 projects from the front face 34 and is arranged closer to the first end 31 than to the second end 32.

As best seen in Fig. 2, the cutting inserts 3 are alternately arranged with the first end 31 or the second end 32 facing towards a distal end 24 of the tool holder 2. In other words, a first cutting insert 3a is inserted and fixed in a first recess 22 of the tool holder 2 with its first end 31 close to the distal end 24 of the tool holder 2. In a second recess 22, adjacent to the first recess 22, a second cutting insert 3b is inserted and fixed with its first end 31 distant from the distal end 24 of the tool holder 2.

As will be understood by the person skilled in the art, the cutting tooth 35 preferably is arranged close to first end 31, which when the cutting insert 3 is inserted in the recess 22 is at least essentially flush with a distal end 24.

When fixing the cutting inserts 2 to the tool holder 2 by tightening the clamping screws 4, the clamping screws 4 act on one of the side face 33 of the cutting insert 3. In the embodiment shown, each side face 33 is provided with a first cavity 37 and a second cavity 38 for receiving ends of two of the three clamping screws 4. The two cavities 37, 38 are arranged close to the first end 31 and the second end 32, respectively, wherein for each side face 33 a distance between the first cavity 37 and the first end 31 differs from the distance between the second cavity 38 and the second end 32, such that cavities 37, 38 provided at opposite side faces 33 are not aligned with one another. On the side face 33 of the upper cutting insert 3 visible in Figs. 3 and 4 the first cavity 37, on the left in Fig. 1, is arranged in the region of the cutting tooth 35, and the second cavity 38 is arranged closer to a middle plane 301 between the first end 31 and the second end 32 than the first cavity 37. On the other side face 33, which is not visible in Figs. 3 and 4 the cavity arranged on the left in Fig. 1 is arranged closer to the middle plane than the cavity arranged on the right.

As best seen in Fig. 4, the design is adapted to a thread to be cut, wherein a distance D between cutting teeth 35 of alternately arranged cutting inserts 3 in the axial direction of the tool holder is an integer multitude N of a pitch p of the thread to be cut, i.e. D = N x p, with the position of the cutting tooth 35 being defined by an axis of symmetry of the threading profile 300. In other words, for each cutting insert 3, a distance A of the cutting tooth 35, i.e. the axis of symmetry of the threading profile 200, from the middle plane 301 between the first end 31 and the second end 32 is set such that twice this distance A is an integer multitude N of the pitch p of the thread to be cut: 2 x A = N x p.

In the embodiment shown, all cutting inserts 3 are identical in design and indexable, such that each cutting insert 3 can be arranged with its first end 31 or with its second end 32 facing towards the distal end of the tool holder 2. Each cutting tooth 35 is provided with two cutting edges, i.e. one cutting edge on each side face 33 of the cutting insert 3. In an alternative embodiment, two different cutting inserts 3 are provided, each cutting insert 3 having only one cutting edge on one of the two side faces 33. In this case, in addition only one of the side faces 33 is provided with cavities 37, 38 and each cutting insert 3

The cutting inserts 3 are for example made from carbide material or other hard materials.

In a typical thread milling operation, the tool holder 2 with the cutting insert 3 fixed thereto is rotated about its axis 200 and moved along a helical path relative to a workpiece (not shown) for forming the thread. Typically, relative movement of the workpiece and the cutting tool 1 is accomplished by moving the cutting tool 1 relative to the workpiece. However, other operations are possible in which the workpiece is moved relative to the cutting tool and/or in which both the workpiece and the cutting tool are moved relative to each other.

Due to the design of the cutting inserts 3, at each moment of the milling operation, only one cutting tooth 35 and, thus, only cutting edge with the length of one pitch is in contact with workpiece. Hence, a contact area between the cutting tool 1 and the workpiece is minimized. Therefore, resulting cutting forces are low and a risk of vibrations is reduced even when forming deep or long threads.

In the foregoing description, the invention has been described with reference to specific examples of embodiments of the invention. It will, however, be appreciated that various modifications and changes may be made therein without departing from the scope of the invention as set forth in the claims.

In the claims, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. Cutting insert having an elongated bar shaped main body with a first end (31) and a second end (32), and with two side faces (33) and a front face (34) extending between the first end (31) and the second (32),
**characterized in that**
the cutting insert (3) has exactly one cutting tooth (35) protruding from the front face (34) which is arranged closer to the first end (31) than to the second end (32).

2. Cutting insert according to claim 1, **characterized in that** the cutting insert (3) is double-sided, wherein both sides of the cutting tooth (35) are provided with a cutting edge (36).

3. Cutting insert according to claim 1 or 2, **characterized in that** a distance (A) of the cutting tooth (35) from a middle plane between the first end (31) and the second end (32) is set such that twice this distance is an integer multitude N of a pitch p of a thread to be cut.

4. Cutting insert according to any one of claims 1, 2 or 3, **characterized in that** at least one of the side faces (33) is provided with at least one cavity (37, 38) for receiving an end of a clamping screw, wherein in particular the at least one cavity (37) is arranged in a region of the cutting tooth (35).

5. Cutting tool comprising:
- a tool holder (2), and
- several cutting inserts (3) according to any one of claims 1 to 4,
wherein the tool holder (2) has several slot-like recesses (22) distributed over its circumference and oriented substantially in an axial direction of the tool holder (2), in which recesses (22) the cutting inserts (3) are insertable,
wherein an even number of cutting inserts (3) is inserted in the recesses (22), and wherein the cutting inserts (3) are alternately arranged with the first end (31) or the second end (32) facing towards a distal end (24) of the tool holder (2).

6. Cutting tool according to claim 5, **characterized in that** a distance (D) between cutting teeth (35) of alternately arranged cutting inserts (3) in the axial direction (200) of the tool holder is an integer multitude N of a pitch p of a thread to be cut.

7. Cutting tool according to claim 5 or 6, **characterized in that** the tool holder (2) is provided with tapped holes (23) each extending from the circumferential surface of the tool holder (2) to one of the recesses (22) and the cutting inserts are fixed in the recess (22) by clamping screws (4) screwed into the tapped holes (23) and acting on one side face (33) of the cutting insert (4).

8. Cutting tool according to claim 5, 6 or 7, **characterized in that** the tool holder (2) is provided with an even number of slot-like recesses (22), which are evenly distribute over its circumference.

9. Use of a cutting insert (3) with a tool holder (2) having several slot-like recesses (22) distributed over its circumference and oriented substantially in a tool axial direction, the cutting insert (3) having an elongated bar shaped main body with a first end (31) and a second end (32), two side faces (33) and a front face (34) extending between the first end (31) and the second end (32), and the cutting insert (3) having exactly one cutting tooth (35) protruding from the front face (34) which is arranged closer to the first end (31) than to the second end (32) of the cutting insert (3), wherein the cutting inserts (3) is inserted in a recess (22) of the tool holder (2) with the first end (31) or the second end (32) facing towards a distal end of the tool holder (2).
